# EUROPÄISCHE PATENTANMELDUNG

(11) **EP 1 030 209 A2**
(43) Veröffentlichungstag der Anmeldung: **23.08.2000**
(21) Anmeldenummer: 00102012.2
(22) Anmeldetag: 02.02.2000
(51) Int. Cl.: G02F 1/1335, G09G 3/34

(54) **Anzeigeeinheit mit variabler Helligkeit**

(30) Priorität: 17.02.1999 DE 19906754
(71) Anmelder: Mannesmann VDO Aktiengesellschaft, 60388 Frankfurt am Main (DE)
(72) Erfinder: Brandt, Peter, 63739 Aschaffenburg (DE)
(74) Vertreter: Rassler, Andrea, Dipl.-Phys.

(57) **Zusammenfassung**

Bei einer Anzeigeeinheit (1) ist eine Anzeige (3) mittels einer Lichtquelle (4) beleuchtbar. Dabei ist die Helligkeit des in die Anzeige (3) einstrahlenden Lichtes mittels einer Flüssigkristallzelle (5) steuerbar. Die Flüssigkristallzelle (5) hat hierzu eine einstellbare Transmission. Durch die Verwendung der Flüssigkristallzelle (5) zur Steuerung der Helligkeit können auch solche Lichtquellen (4) verwendet werden, die einer elektrischen oder elektronischen Helligkeitsregelung nicht zugänglich sind. Insbesondere können dadurch auch Leuchtstofflampen verwendet werden, die neben einem geringen Energieverbrauch auch eine hohe Betriebssicherheit und eine lediglich geringe Wärmeentwicklung aufweisen.

## Beschreibung

Die Erfindung betrifft eine Anzeigeeinheit, insbesondere für ein Fahrzeug, mit einer eine Anzeige beleuchtenden Lichtquelle und mit einem zur Einstellung der Helligkeit des die Anzeige beleuchtenden Lichtes vorgesehenen Dimmer.

Solche Anzeigeeinheiten werden beispielsweise bei modernen Kraftfahrzeugen eingesetzt und sind allgemein bekannt. Die Einstellung der Helligkeit erfolgt dabei insbesondere zur Anpassung an unterschiedliche Umgebungshelligkeiten, um so beispielsweise einerseits bei starker Sonneneinstrahlung noch eine ausreichende Ablesbarkeit zu ermöglichen, andererseits aber eine Blendung der Kraftfahrzeuginsassen bei Nacht zu vermeiden.

Der Dimmer hat hierzu im wesentlichen eine elektrische oder elektronische Steuerung und gegebenenfalls zusätzlich auch einen Sensor zur Erfassung der Umgebungshelligkeit, um so eine selbsttätige Anpassung der Helligkeit vornehmen zu können.

Nachteilig wirkt sich bei der beschriebenen Anzeigeeinheit aus, dass der Dimmer auf die jeweils verwendete Art und Stärke der Lichtquelle abgestimmt werden muss. Neben dem damit verbundenen Aufwand erweist sich die bei verschiedenen Lichtquellen teilweise stark eingeschränkte Eignung zur elektrischen oder elektronischen Steuerung der Helligkeit als hinderlich. Die Einstellung der Helligkeit ist daher beim heutigen Stand der Technik unter Umständen mit erheblichem Aufwand verbunden.

Weiterhin wirkt sich bei bekannten Dimmern nachteilig aus, dass die Helligkeit der Lichtquelle häufig von der Umgebungstemperatur abhängig ist und der Dimmer daher zusätzlich mit einem Temperatursensor verbunden sein muss. Eine gegebenenfalls erforderliche Beheizung der Lichtquelle erschwert die Einstellung der Helligkeit zusätzlich.

Es ist auch bereits an Dimmer gedacht worden, bei denen die Helligkeit der Lichtquelle mittels einer Blende oder eines mechanisch einstellbaren Filters steuerbar ist. Dabei hat sich jedoch in der Praxis gezeigt, dass dabei entweder die Ansteuerung nicht mit der gewünschten Genauigkeit realisierbar oder aber die Lichtverteilung ungleichmäßig ist. Ein derart ausgeführter Dimmer hat sich daher als ungeeignet erwiesen.

Der Erfindung liegt das Problem zugrunde, eine Anzeigeeinheit der eingangs genannten Art so zu gestalten, dass diese eine einfache Einstellung der Helligkeit mittels des Dimmers ermöglicht. Dabei soll der Dimmer insbesondere unabhängig von der Art der verwendeten Lichtquelle zuverlässig einsetzbar sein.

Dieses Problem wird erfindungsgemäß dadurch gelöst, dass der Dimmer durch eine zwischen der Lichtquelle und der Anzeige angeordnete Flüssigkristallzelle mit einer einstellbaren Transmission gebildet ist.

Hierdurch können auch solche Lichtquellen wirkungsvoll verwendet werden, bei denen eine elektronische oder elektrische Dimmung nicht möglich ist. Dabei ermöglicht die Flüssigkristallzelle eine stufenlos einstellbare Transmission, die insbesondere auch über die gesamte Lichtdurchtrittsfläche der Flüssigkristallzelle weitgehend homogen ist. Das von der Lichtquelle ausgesandte Licht kann dabei unmittelbar durch die Flüssigkristallzelle hindurchtreten oder aber z.B. auch von der Lichtquelle über einen Lichtleiter und/oder Reflektoren zur Flussigkristallzelle und zur Anzeige geführt werden. Die Ansteuerung der Flüssigkristallzelle ist zudem problemlos entsprechend der jeweiligen elektrooptischen Kennlinie des verwendeten Flüssigkristalls möglich.

Weiterhin ist die Flüssigkristallzelle unabhängig von der Lichtquelle ansteuerbar, so dass insbesondere gegebenenfalls vorhandene elektrische Heizungen der Lichtquelle die Transmission nicht beeinflussen.

Dabei ist eine Weiterbildung der Erfindung dadurch besonders vorteilhaft, dass die Flüssigkristallzelle ganzflächige Elektroden aufweist. Hierdurch erhält die Flüssigkristallzelle einen einfachen Aufbau und weist zudem eine über ihre gesamte Fläche einheitliche Transmission auf. Helligkeitsdifferenzen in verschiedenen Bereichen der Anzeige können dadurch ausgeschlossen werden.

Eine andere besonders vorteilhafte Ausführungsform der Erfindung ist dann gegeben, wenn die Flüssigkristallzelle einen die Transmission reduzierenden Zusatzstoff enthält. Dieser beispielsweise als Farbstoff ausgeführte Zusatzstoff ermöglicht eine Reduzierung der Transmission, so dass eine zusätzliche Abdunkelung bei der die niedrigste Transmission aufweisenden Ansteuerung erreicht wird. Die Anzeigeeinheit kann somit durch Hinzufügen des Zusatzstoffes problemlos an individuelle Verwendungszwecke angepasst werden. Auch eine Einfärbung des Lichtes wird dadurch ermöglicht, um so die Ablesbarkeit und den optischen Eindruck weiter zu verbessern.

Besonders vorteilhaft ist auch eine Weiterbildung der Erfindung, bei der die Flüssigkristallzelle als eine Flüssigkristallfolie ausgeführt ist. Diese lässt sich unterschiedlichen geometrischen Abmessungen optimal anpassen und besitzt zudem eine geringe Bauhöhe, so dass entsprechend wenig Bauraum notwendig wird.

Durch die erfindungsgemäße Anzeigeeinheit ist es möglich, auch solche Lichtquellen zu verwenden, die bisher aufgrund ihrer eingeschränkten elektrischen Dimmbarkeit ungeeignet waren. Eine besonders vorteilhafte Ausführungsform der Erfindung ist daher auch dann gegeben, wenn die Lichtquelle eine Leuchtstofflampe ist.

Hierdurch verbraucht die Anzeigeeinheit zugleich wenig Energie und strahlt das Licht gleichmäßig ab. Zudem ist dabei die Wärmeentwicklung sehr gering, so dass auf zusätzliche Maßnahmen (z.B. Lüftungsschlitze) zur Kühlung der Anzeigeeinheit verzichtet werden kann, was insbesondere in Kraftfahrzeugen von Vorteil ist.

Besonders zweckmäßig ist dabei auch eine Weiterbildung, bei der die Lichtquelle eine Kaltkathodenlampe ist. Die Kaltkathodenlampe eignet sich aufgrund ihres hohen Wirkungsgrades zum Einsatz bei solchen Anzeigeeinheiten, konnte aber bisher nicht eingesetzt werden, da nach dem heutigen Kenntnisstand deren elektrische oder elektronische Dimmung nur mit erheblichem, zu sehr hohen Kosten führendem Aufwand möglich ist.

Die Anzeigeeinheit kann grundsätzlich beliebige Anzeigen, beispielsweise Zeigerinstrumente oder auch Leuchtsignale, aufweisen. Eine besonders gut geeignete Ausgestaltung der Erfindung ist hingegen dann gegeben, wenn die Anzeige eine Flüssigkristallanzeige ist.

Diese ist mittels der Flüssigkristallzelle mit individuell anpassbarer Helligkeit beleuchtbar, die insbesondere auch in Abhängigkeit der Umgebungshelligkeit erfolgen kann. Beispielsweise kann hierbei wahlweise eine Positiv- oder Negativdarstellung gewählt werden, welche aufgrund ihres unterschiedlichen Anteils der hellen Flächen zu den dunklen Flächen eine sensible Anpassung der jeweiligen Lichtdichte erfordert, um eine gleichbleibend gute Ablesbarkeit zu ermöglichen. Ebenfalls realisierbar sind Anwendungen bei sogenannten Head-Up-Displays, bei denen die Anzeige in Form einer Einspiegelung in die Frontscheibe des Kraftfahrzeuges erreicht wird.

Eine andere günstige Weiterbildung der Erfindung ist dadurch gegeben, dass die Anzeigeeinheit zusätzlich zu der ersten Anzeige zumindest eine weitere, mittels der Lichtquelle beleuchtbare Anzeige hat.

Die Anzeigeeinheit mit mehreren Anzeigen kann daher beispielsweise mit lediglich einer einzigen Lichtquelle beleuchtbar ausgeführt sein. Dabei kann das die weitere Anzeige beleuchtende Licht der Lichtquelle ebenfalls zunächst durch die Flüssigkristallzelle hindurchtreten oder aber unmittelbar die weitere Anzeige beleuchten. Die Lichtquelle kann dabei sowohl zur Hintergrundbeleuchtung oder auch zur direkten Beleuchtung, beispielsweise einer Zeigerfahne, dienen.

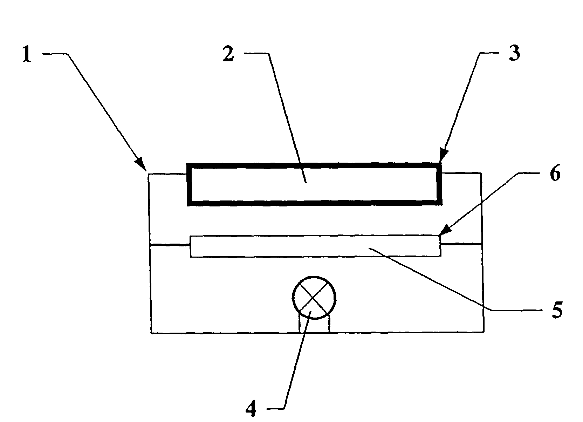

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in einer Seitenansicht eine Prinzipdarstellung einer in eine nicht weiter dargestellte Instrumententafel eines Kraftfahrzeugs eingebauten erfindungsgemäßen Anzeigeeinheit 1 mit einer als Flüssigkristallanzeige 2 ausgeführten Anzeige 3. Die Flüssigkristallanzeige 2 ist mittels einer beispielsweise als Leuchtstofflampe ausgeführten Lichtquelle 4 der Anzeigeeinheit 1 beleuchtbar. Hierzu tritt das von der Lichtquelle 4 abgestrahlte Licht zunächst in einen als Flüssigkristallzelle 5 ausgeführten Dimmer 6 ein, welcher eine veränderliche Transmission aufweist. Daher gelangt lediglich ein einstellbarer Anteil des Lichtes der Lichtquelle 4 in die Anzeige 3, die somit für einen nicht dargestellten Betrachter der Anzeigeeinheit 1 in entsprechend veränderter Helligkeit erscheint. Insbesondere sind dadurch wahlweise Positiv- und Negativdarstellungen realisierbar, bei denen für eine einwandfreie Ablesbarkeit jeweils eine stark abweichende Helligkeit erforderlich ist. Eine elektrische oder elektronische Ansteuerung der Lichtquelle 4 ist hingegen nicht erforderlich.

## Patentansprüche

1. Anzeigeeinheit, insbesondere für ein Fahrzeug, mit einer eine Anzeige beleuchtenden Lichtquelle und mit einem zur Einstellung der Helligkeit des die Anzeige beleuchtenden Lichtes vorgesehenen Dimmer, **dadurch gekennzeichnet**, dass der Dimmer (6) durch eine zwischen der Lichtquelle (4) und der Anzeige (3) angeordnete Flüssigkristallzelle (5) mit einer einstellbaren Transmission gebildet ist.

2. Anzeigeeinheit nach Anspruch 1, **dadurch gekennzeichnet**, dass die Flüssigkristallzelle (5) ganzflächige Elektroden aufweist.

3. Anzeigeeinheit nach Anspruch 1 oder 2, **dadurch gekennzeichnet**, dass die Flüssigkristallzelle (5) einen die Transmission reduzierenden Zusatzstoff enthält.

4. Anzeigeeinheit nach einem der vorhergehenden Ansprüche, **dadurch gekennzeichnet**, dass die Flüssigkristallzelle (5) als eine Flüssigkristallfolie ausgeführt ist.

5. Anzeigeeinheit nach einem der vorhergehenden Ansprüche, **dadurch gekennzeichnet**, dass die Lichtquelle (4) eine Leuchtstofflampe ist.

6. Anzeigeeinheit nach einem der vorhergehenden Ansprüche, **dadurch gekennzeichnet**, dass die Lichtquelle (4) eine Kaltkathodenlampe ist.

7. Anzeigeeinheit nach einem der vorhergehenden Ansprüche, **dadurch gekennzeichnet**, dass die Anzeige (3) eine Flüssigkristallanzeige (2) ist.

8. Anzeigeeinheit nach einem der vorhergehenden Ansprüche**, dadurch gekennzeichnet**, dass die Anzeigeeinheit (1) zusätzlich zu der ersten Anzeige (3) zumindest eine weitere, mittels der Lichtquelle (4) beleuchtbare Anzeige hat.
